# EUROPEAN PATENT APPLICATION

(11) **EP 4 654 115 A1**
(43) Date of publication of application: **26.11.2025**
(21) Application number: 24753339.1
(22) Date of filing: 06.02.2024
(51) Int. Cl.: G06Q 40/04

(54) **INFORMATION PROCESSING SYSTEM, INFORMATION PROCESSING METHOD, AND PROGRAM**

(30) Priority: 06.02.2023 JP 2023016264
(71) Applicant: Realize Corporation, Inc., Tokyo 106-6134 (JP)
(72) Inventor: IMAFUKU, Yosuke, Tokyo 106-6134 (JP)
(74) Representative: Ström & Gulliksson AB
(86) International application number: PCT/JP2024/003841
(87) International publication number: WO 2024/166896

(57) **Abstract**

The present invention provides a fund product in which an object to be invested has a highly stable operation yield, demand and supply balance, and market price, and of which the desired profit and loss of an investor can be recorded. A purchase and sell cost acquisition unit 301 acquires a purchase cost and a sell cost after a prescribed period elapses for a reusable rocket RC. A rental cost acquisition unit 303 acquires a rental cost when a borrower R rents the reusable rocket RC. A depreciation calculation unit 302 calculates a depreciation cost of the reusable rocket RC. A management cost acquisition unit 304 acquires a management cost including a repair/maintenance cost of the reusable rocket RC. A profit and loss calculation unit 305 calculates the profit and loss sum of each of a rocket fund F and an investor I. A commercialization unit 202 sets a product of the rocket fund F on the basis of each of the above costs.

## Description

### TECHNICAL FIELD

The present invention relates to an information processing system, an information processing method, and a program.

### BACKGROUND ART

Conventionally, systems for formulating management strategies have been proposed, which are intended to facilitate investment activities in funds and to stably provide high dividends to investors (for example, see Patent Document 1).

### Citation List

### Patent Document

Patent Document 1: Japanese Unexamined Patent Application, Publication No. 2003-108776

### DISCLOSURE OF THE INVENTION

### Problems to be Solved by the Invention

However, investors have demands to invest in funds that, in comparison with conventional technologies including Patent Document 1, have superior investment yields, supply-demand balance, and trading market stability, and are capable of achieving desired profits and losses.

The present invention has been made in view of such circumstances, and an object thereof is to provide investors with fund products which have superior investment yields, supply-demand balance, and trading market stability, and which are capable of achieving profits and losses desired by the investors.

### Means for Solving the Problems

In order to achieve the above object, an information processing system according to one aspect of the present invention is:
an information processing system configured to determine a fund product that generates profit, based on a rental fee obtained when t mobile bodies (t is an integer equal to or greater than 1), which are purchased through investment by an investor, are leased to a renter, and a sale price obtained when the t mobile bodies are sold after a predetermined period, the information processing system including:
a purchase/sale cost acquisition unit configured to acquire a purchase cost of the t mobile bodies and a sale price of the t mobile bodies after the predetermined period;
a rental fee acquisition unit configured to acquire a rental fee in a case where each of the t mobile bodies is leased to the renter;
a depreciation calculation unit configured to calculate a depreciation cost for each of the t mobile bodies;
a management cost acquisition unit configured to acquire a management cost including repair and maintenance costs associated with repair and maintenance of each of the t mobile bodies during the predetermined period;
a profit/loss calculation unit configured to calculate a profit/loss amount of the fund and a profit/loss amount of the investor, based on the rental fee, the purchase cost, the sale price, the depreciation cost, and the management cost; and
a productization unit configured to set the fund product, based on the rental fee, the purchase cost, the sale price, the management cost, the profit/loss of the fund, and the profit/loss of the investor.

An information processing method and a program according to one aspect of the present invention are, respectively, a method and a program corresponding to the information processing system according to one aspect of the present invention described above.

### Effects of the Invention

According to the present invention, it is possible to provide fund products which have superior investment yields, supply-demand balance, and trading market stability, and which are capable of achieving profits and losses desired by the investors.

### BRIEF DESCRIPTION OF THE DRAWINGS

FIG. 1 is a diagram illustrating a fund target that can be implemented by applying the information processing system according to one embodiment of the present invention;
FIG. 2 is a diagram illustrating an outline of a fund that can be implemented by applying the information processing system according to one embodiment of the present invention;
FIG. 3 is a diagram illustrating an outline of the configuration of the information processing system applied to the rocket fund illustrated in FIG. 1 and FIG. 2, namely, the information processing system according to one embodiment of the present invention;
FIG. 4 is a block diagram illustrating a hardware configuration of a service providing server illustrated in FIG. 3;
FIG. 5 is a functional block diagram illustrating an example of the functional configuration of the service providing server of the information processing system illustrated in FIG. 3;
FIG. 6 is a functional block diagram illustrating another example, different from FIG. 5, of the functional configuration of the service providing server of the information processing system illustrated in FIG. 3;
FIG. 7 is a diagram illustrating a specific example of depreciation costs of a reusable rocket, obtained as a result of calculations, based on a calculation method using the number of available uses for each component;
FIG. 8 is a diagram illustrating a specific example of depreciation costs of a reusable rocket, obtained as a result of calculations, based on a calculation method using the useful life for each component; and
FIG. 9 is a diagram illustrating a specific example of depreciation costs of a reusable rocket, obtained as a result of calculations, based on a calculation method using both the number of uses and the useful life for each component.

### PREFERRED MODE FOR CARRYING OUT THE INVENTION

Hereinafter, an embodiment of the present invention will be described with reference to the drawings.

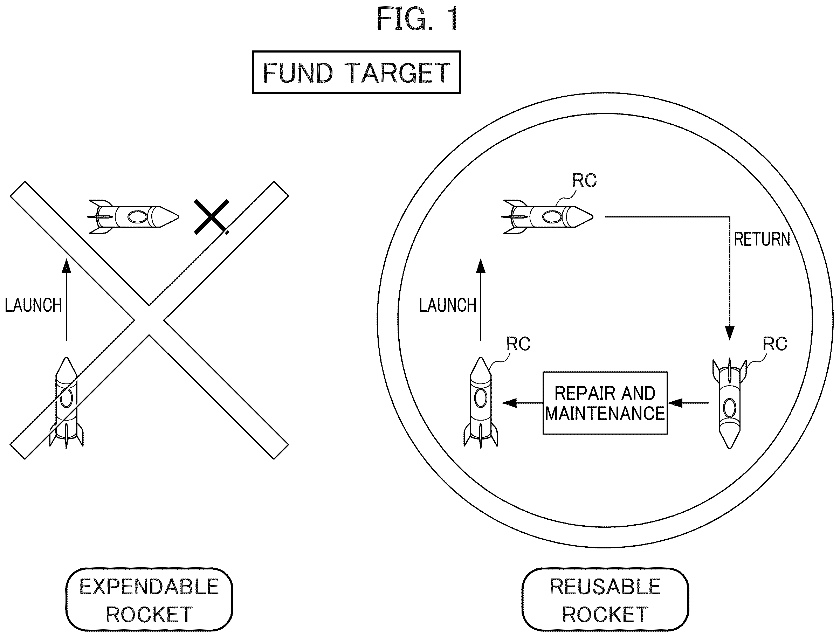

FIG. 1 is a diagram illustrating an example of a fund target that can be implemented by applying the information processing system according to one embodiment of the present invention. As illustrated in FIG. 1, the fund target in the present embodiment is a reusable rocket RC among rockets.

That is, rockets are generally classified into expendable rockets and reusable rockets RC. An expendable rocket refers to a launch system that can only be used once, and is referred to as an "Expendable Launch System" or "Expendable Launch Vehicle (ELV)", emphasizing its single-use nature. Such expendable rockets are not included as targets of the fund. The reusable rocket RC refers to a rocket system that can be repeatedly used in practice, such as a reusable space transportation vehicle or a spaceplane. Reusable space transportation vehicles include "Reusable Launch Vehicles (RLV)", which are launch vehicles capable of repeated launches into space. The term "RLV" is the counterpart to "ELV", the term for expendable rockets. Here, the expression "include" is used to indicate that reusable space transportation vehicles which themselves do not have launch capability, such as HOPE^{®} and X-37^{®}, are also included in the reusable rockets RC. A spaceplane is a spacecraft capable of taxiing, taking off, landing, exiting the atmosphere, and re-entering the atmosphere on its own, without requiring special launch equipment, similar to an aircraft. The reusable rocket RC described above is included as a fund target.

The reusable rocket RC is characterized in that, after being launched from the Earth, traveling through space, and returning to the Earth, the reusable rocket RC undergoes repair and maintenance to be brought into a state suitable for the next launch. As will be described later, in the creation of the fund in the present embodiment, the costs of repair and maintenance of the reusable rocket RC are also taken into account.

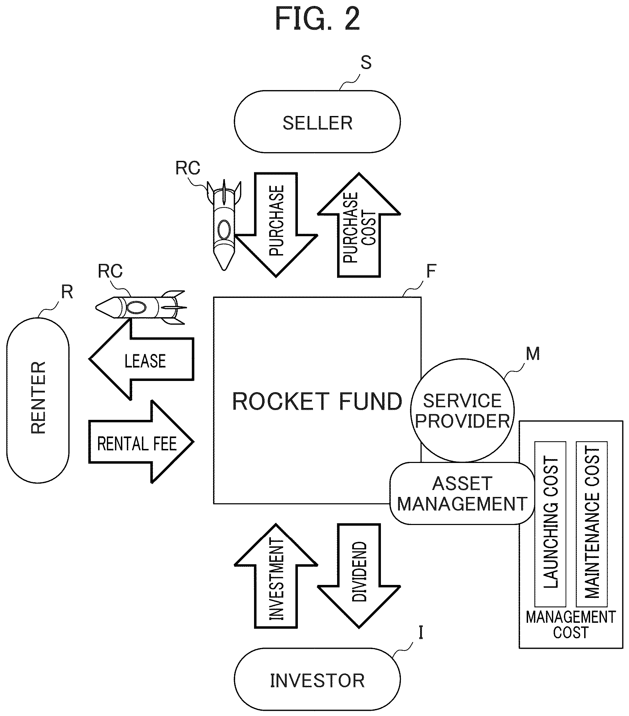

FIG. 2 is a diagram illustrating an outline of a fund that can be implemented by applying the information processing system according to one embodiment of the present invention. In the fund F of the present embodiment, the reusable rocket RC described above is the investment target, asset management is performed by a service provider M, and the dividends (revenue) to investors I are funded by rental fees (so-called lease fees) for the reusable rocket RC. Hereinafter, the fund F of the present embodiment targeting such a reusable rocket RC is referred to as a "rocket fund F".

As illustrated in FIG. 2, parties involved in the rocket fund F include the service provider M, the investor I, the seller S, and the renter R.

Here, the service provider M is an entity that sells the rocket fund F as a product to the investor I, and in the present embodiment, also performs asset management and serves as the fund manager. The fund manager refers to an individual or organization that, as the operating entity of the rocket fund F, manages and increases the assets entrusted by the investor I.

The investor I is an individual or corporation that, with the primary objective of increasing assets in the future, engages in the activity of investing current assets into the rocket fund F, including, for example, individual investors and institutional investors. The purpose of the investment by the investor I in the rocket fund F includes achieving a profit/loss amount from the rocket fund F, with respect to the investment amount, that matches a desired amount of the investor I. In the present embodiment, repair, maintenance, and launch of the reusable rocket RC are performed by the service provider M responsible for asset management; however, this is not a limiting condition. That is, the investor I may perform at least part of the repair, maintenance, and launch of the reusable rocket RC. In such a case, since the service provider M does not need to bear the costs of repair, maintenance, or launch, the corresponding amount may be returned to the investor I as dividends (revenue).

The seller S is an entity that sells the reusable rocket RC, based on a sales contract with the rocket fund F (or the service provider M performing asset management), and receives compensation. Here, the reusable rocket RC does not necessarily have to be new (i.e., never previously owned), and may be second-hand. The financial resources (purchase cost) for the rocket fund F (or the service provider M performing asset management) to purchase the reusable rocket RC from the seller S are the assets invested by the investor I.

The renter R is an entity that leases one or more of the reusable rockets RC, which are the targets of the rocket fund F, based on a lease contract with the rocket fund F (or the service provider M performing asset management). The renter R pays the rental fee for the reusable rocket RC to the rocket fund F (or the service provider M performing asset management), either in a lump sum or on a predetermined time basis (e.g., monthly). As described above, this rental fee serves as the funding source for dividends (revenue) to the investor I. Here, the usage purpose of the reusable rocket RC by the renter R is not particularly limited, and may include transporting people for space travel or transporting materials for operations in space. In the present embodiment, repair, maintenance, and launch of the reusable rocket RC are performed by the service provider M responsible for asset management; however, this is not a limiting condition. That is, the renter R may perform at least part of the repair, maintenance, and launch of the reusable rocket RC. In such a case, since the service provider M does not need to bear the costs of repair, maintenance, or launch, the rental fee may be set at a lower price.

That is, in the present embodiment, the cost for purchasing t reusable rockets RC (t is an integer equal to or greater than 1) as investment targets is covered by funds invested by the investor I. The rocket fund F (or the service provider M performing asset management) purchases the t reusable rockets RC from the seller S and enters into a purchase agreement. As a result, the ownership of the t reusable rockets RC belongs to the rocket fund F. Accordingly, the service provider M enters into a lease agreement and an asset management agreement with the rocket fund F. Here, the asset management agreement refers to an agreement that stipulates that the service provider M performs the management of the reusable rockets RC on behalf of the fund, which is the owner of the reusable rockets RC. Based on the asset management agreement, management costs are paid from the rocket fund F to the service provider M. These management costs include the costs associated with launching the t reusable rockets RC (hereinafter referred to as "launching costs") and the costs associated with repairing and maintaining the t reusable rockets RC (hereinafter referred to as "repair and maintenance costs"). In the present embodiment, the service provider M leases the t reusable rockets RC from the fund and further leases them to the renter R, based on a lease agreement with the renter. The first rental fee (so-called lease fee) for the t reusable rockets RC paid from the renter R to the service provider M is paid by the renter R to the service provider M. The second rental fee for the t reusable rockets RC paid from the service provider M to the rocket fund F is paid by the service provider M to the rocket fund F. Here, if the first rental fee is higher than the second rental fee, the service provider M can obtain a profit. The rental fee of the rocket fund F used in the calculations (including simulations) (described later) for forming the rocket fund F as a product refers to the second rental fee. Further, when a predetermined number of years specified in advance by the rocket fund F elapses, the reusable rockets RC may be sold by the rocket fund F. The buyer is not particularly limited and may be the service provider M or another entity not illustrated in the drawings. In this manner, the rocket fund F can obtain revenue from the second rental fee based on the lease agreement with the service provider M for the t reusable rockets RC, and from the sale price based on the sale of the t reusable rockets RC after the predetermined number of years. The rocket fund F can provide stable dividends to the investor I using this revenue as the source. Additionally, the service provider M can obtain revenue, based on the management costs, including launching costs and repair and maintenance costs, under the asset management agreement with the rocket fund F, and based on the second rental fee (which is equal to or greater than the first rental fee) under the lease agreement with the renter R.

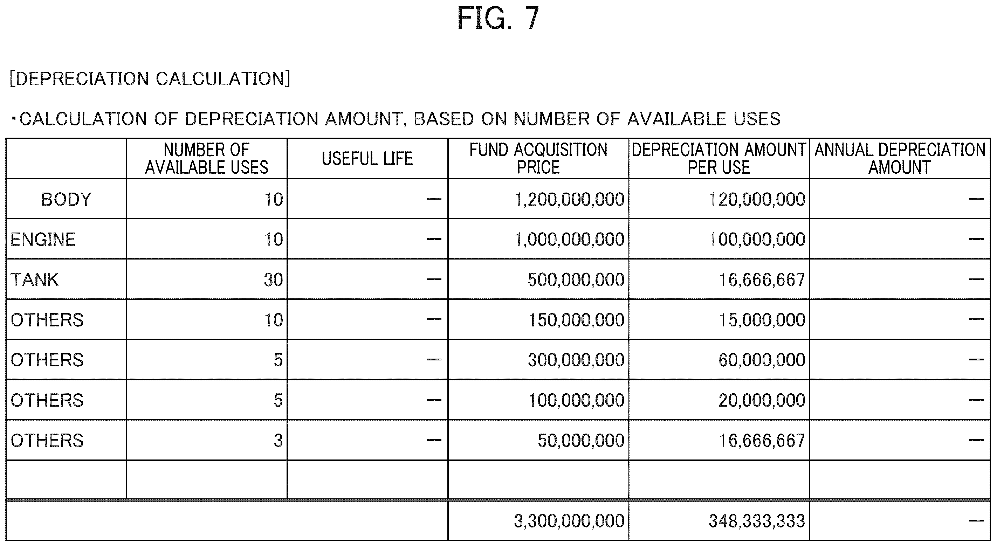

In the accounting process for purchasing reusable rockets RC as targets of the rocket fund F, it is not permitted to immediately expense all the amounts spent for such acquisition. This is because the reusable rockets RC are used over several years and must be expensed as depreciation costs in accordance with the period of use of the reusable rockets RC. This period of use is referred to as the "useful life". In this case, with respect to the purchase cost of the reusable rocket RC as the target of the rocket fund F, the investor I may expense, in the investor's own accounting, the depreciation cost corresponding to the portion funded by the investor, over the period until the useful life elapses. That is, by purchasing a product of the rocket fund F, the investor I can enjoy tax-related benefits. However, as of the filing date of the present application, the useful life of the reusable rockets RC is not determined under the laws of Japan. Furthermore, since the reusable rockets RC may be used a plurality of times repeatedly, depreciation costs cannot be determined based solely on the useful life. Therefore, the depreciation cost of the reusable rockets RC cannot be calculated simply by considering the useful life alone, and must be realistically calculated by combining the number of available uses and the useful life for each component. Specific calculation examples of the depreciation costs of the reusable rockets RC are illustrated and calculated in FIGS. 7 to 10.

In this respect, the service provider M can reliably provide such an excellent fund product (the rocket fund F) to the investor I. Furthermore, as described above, the service provider M can sufficiently recover profits even after dividends are paid to the investor I.

In addition, in the rocket fund F, the renter R can obtain a new method of procuring reusable rockets RC by leasing the reusable rockets RC from the service provider M. Conventionally, general methods of procuring reusable rockets RC include manufacturing the reusable rockets RC by oneself or purchasing new reusable rockets RC. In such cases, the manufacturing cost or purchase cost, repair and maintenance costs, launching costs, and taxes must be borne by the procuring party, while the reusable rockets RC are not highly valued as financial assets. Moreover, the risk of failure of the reusable rockets RC also exists. In other words, the conventional methods of procuring reusable rockets RC involve such disadvantages. However, in the rocket fund F, since the ownership of the reusable rockets RC used by the renter R belongs to the rocket fund F, such disadvantages associated with manufacturing or directly purchasing the reusable rockets RC by the renter R do not occur. That is, the renter R is not required to own the reusable rockets RC and only needs to pay the rental fee, either in a lump sum or on a predetermined time basis (e.g., monthly), to the service provider M, based on the content of the lease agreement concluded with the service provider M. Furthermore, depending on the content of the lease agreement, financial burdens such as taxes and risks associated with repair, maintenance, launching, and failure during use may be borne by the rocket fund F rather than by the renter R. Therefore, when the business health (e.g., balance sheet) of the renter R is evaluated by third parties including financial institutions, leasing the reusable rockets RC results in a higher evaluation than purchasing the reusable rockets RC.

As described above, the product of the rocket fund F is an attractive fund that can provide benefits to the investor I, the service provider M, and the renter R.

However, even if the aforementioned repair and maintenance are performed, there remains a relatively high risk that the reusable rockets RC may become unusable before the expiration of the period specified by the rocket fund F (i.e., the timing of sale), compared to vehicles such as trucks described later. Accordingly, the rocket fund F is designed to account for the risk of the reusable rockets RC becoming unusable.

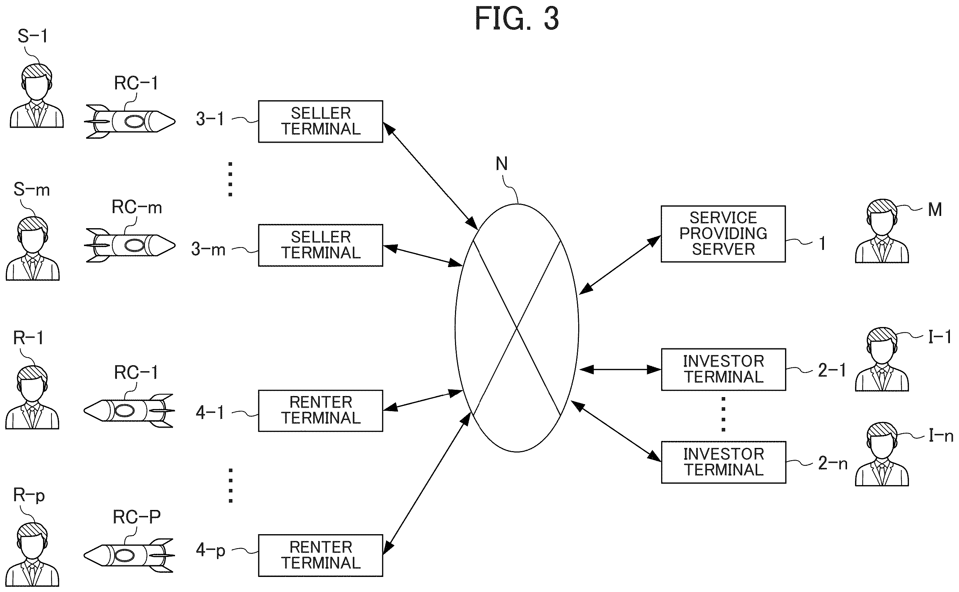

FIG. 3 is a diagram illustrating an outline of the configuration of the information processing system applied to the rocket fund illustrated in FIGS. 1 and 2, namely, the information processing system according to one embodiment of the present invention.

The information processing system illustrated in FIG. 3 includes a service providing server 1 operated by the service provider M, investor terminals 2-1 to 2-n (n is any integer equal to or greater than 1) operated by respective investors I-1 to I-n, seller terminals 3-1 to 3-m (m is any integer equal to or greater than 1) operated by respective sellers S-1 to S-m, and renter terminals 4-1 to 4-p (p is any integer equal to or greater than 1) operated by respective renters R-1 to R-p. These components are interconnected via a predetermined network N, such as the Internet.

Hereinafter, when there is no need to distinguish among the respective investors I-1 to I-n, investor terminals 2-1 to 2-n, sellers S-1 to S-m, seller terminals 3-1 to 3-m, renters R-1 to R-p, and renter terminals 4-1 to 4-p, these may be collectively referred to as the "investor I", "investor terminal 2", "seller S", "seller terminal 3", "renter R", and "renter terminal 4", respectively.

The service providing server 1 executes various processing to manage the operations of the investor terminal 2, the seller terminal 3, and the renter terminal 4. The investor terminal 2 is an information processing terminal operated by each investor I, and is configured as, for example, a personal computer or a smartphone. The seller terminal 3 is an information processing terminal operated by each seller S, and is configured as, for example, a personal computer or a smartphone. The renter terminal 4 is an information processing terminal operated by each renter R, and is configured as, for example, a personal computer or a smartphone.

As described above, the product of the rocket fund F is an attractive fund that can provide benefits to each of the investor I, the service provider M, and the renter R. Accordingly, it is desirable that the content of the rocket fund F product ensures appropriate profits and losses for all four parties, namely, the investor I, the service provider M, the rocket fund F, and the renter R. Thus, the service provider M generates the rocket fund F product as an appropriate combination of the following items (1) to (6) for each of the t reusable rockets RC. Each value or amount in items (1) to (6) represents an estimated value or amount at the consideration stage.
(1) Purchase cost from the seller S (the estimated purchase amount at the consideration stage).
   Here, the purchase cost may be directly acquired from the seller S, or alternatively, may be calculated from parameters (hereinafter referred to as "parameter information") including, for example, the type, historical information such as the number of years since the first sale as a new product, and the new price or market price as a used product.
(2) Sale price (trade-in value) after a predetermined period following purchase from the seller S.
(3) Depreciation cost.
(4) Rental fee.
   Here, the rental fee refers to the first rental fee and the second rental fee described above, but for the sake of simplicity, the first and second rental fees are assumed to be equal, and are hereinafter collectively referred to as the "rental fee".
(5) Management cost including launching cost and repair/maintenance cost.
(6) At least the profit and loss of the investor I and the rocket fund F (as needed, also including the profit and loss of the service provider M and the renter R).

The service providing server 1 in the present embodiment generates the rocket fund F product by performing calculations, based on combinations of the above items (1) to (6), and also performs simulations on various combinations of the items (1) to (6). In this manner, it becomes possible to provide an appropriate product for the rocket fund F. Such a product appropriately considers at least the profit and loss of the investor I and the rocket fund F. Furthermore, by increasing the number of parameters or otherwise enabling the service providing server 1 to perform appropriate calculations, it becomes possible to provide an optimized product that comprehensively considers not only the profit and loss of the investor I and the rocket fund F, but also the profit and loss of the service provider M and the renter R (including rental fees, financial advantages or disadvantages, etc.).

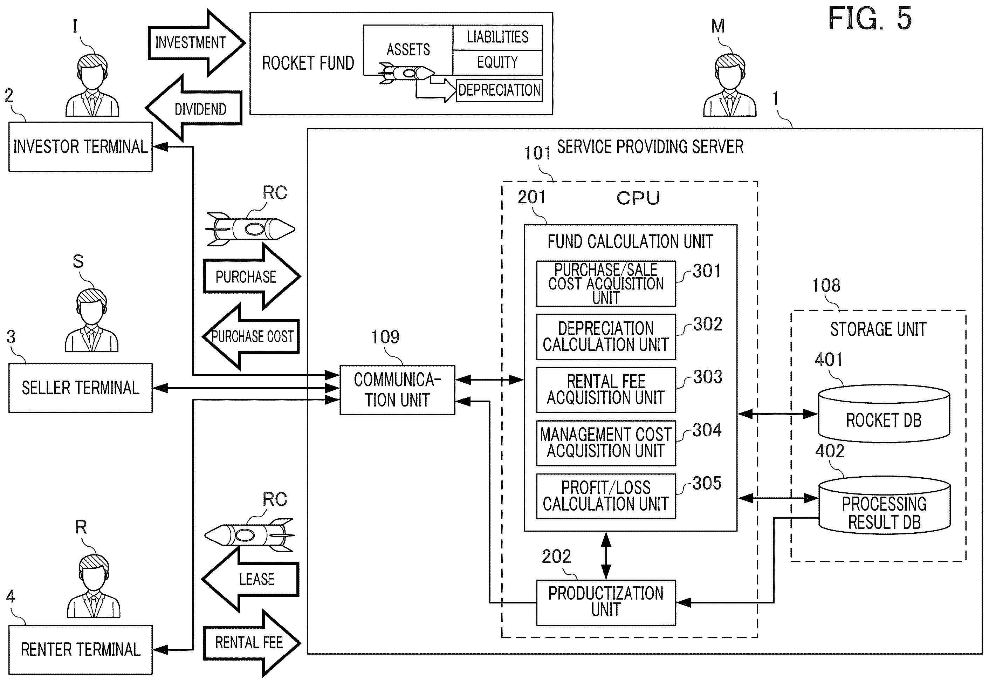

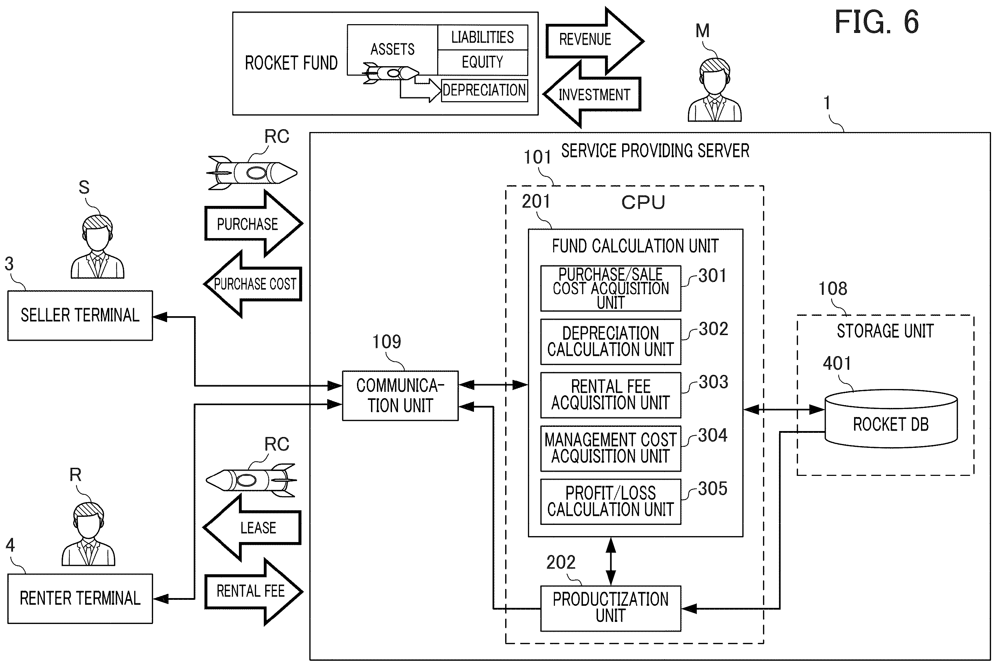

Details of the processing executed by the service providing server 1 will be described later with reference to FIGS. 5 and 6.

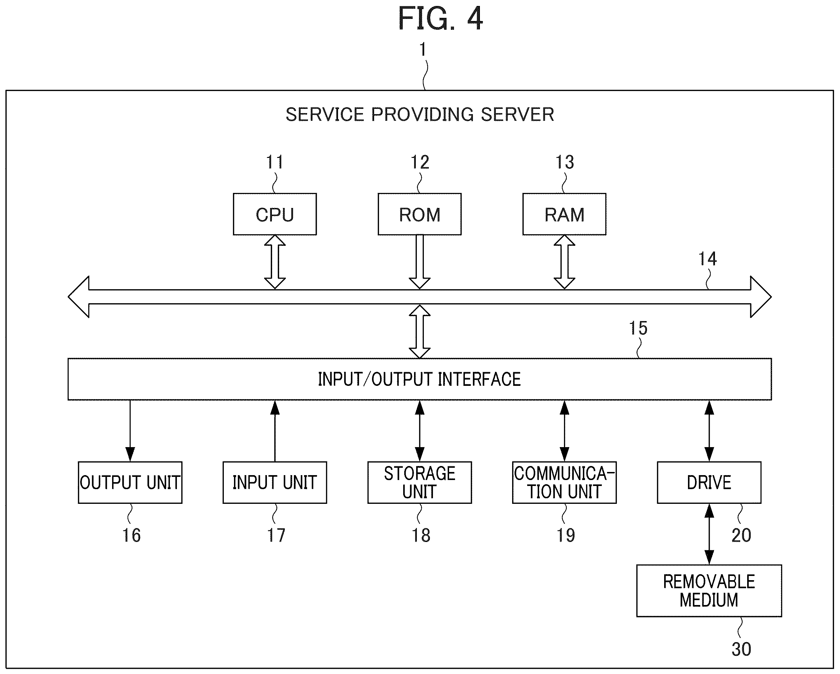

FIG. 4 is a block diagram illustrating a hardware configuration of the service providing server illustrated in FIG. 3.

The service providing server 1 includes a central processing unit (CPU) 11, a read-only memory (ROM) 12, a random access memory (RAM) 13, a bus 14, an input/output interface 15, an output unit 16, an input unit 17, a storage unit 18, a communication unit 19, and a drive 20.

The CPU 11 executes various processing in accordance with a program stored in the ROM 12 or a program loaded from the storage unit 18 into the RAM 13. The RAM 13 also stores data necessary for the CPU 11 to execute the various processing as needed.

The CPU 11, the ROM 12, and the RAM 13 are interconnected via the bus 14. The input/output interface 15 is also connected to the bus 14. The output unit 16, the input unit 17, the storage unit 18, the communication unit 19, and the drive 20 are connected to the input/output interface 15.

The output unit 16 is configured with a display, speaker, or the like, and outputs various types of information as images or sound. The input unit 17 is configured with a keyboard, mouse, or the like, and is used to input various types of information.

The storage unit 18 is configured with a hard disk, dynamic random access memory (DRAM), or the like, and stores various types of data. The communication unit 19 performs communication with other devices (in the example illustrated in FIG. 3, the investor terminals 2-1 to 2-n, the seller terminals 3-1 to 3-m, and the renter terminals 4-1 to 4-p) via the network N including the Internet.

A removable medium 30, which may be a magnetic disk, optical disk, magneto-optical disk, or semiconductor memory, is appropriately inserted into the drive 20. A program read from the removable medium 30 by the drive 20 may be installed in the storage unit 18 as needed. The removable medium 30 can also store various types of data stored in the storage unit 18, in a manner similar to the storage unit 18

Although not illustrated, the investor terminal 2, the seller terminal 3, and the renter terminal 4 in the information processing system illustrated in FIG. 3, as an embodiment of the present invention, also have the same hardware configuration as illustrated in FIG. 4.

FIG. 5 is a functional block diagram illustrating an example of the functional configuration of the service providing server, among the components of the information processing system illustrated in FIG. 3.

As illustrated in FIG. 3, the CPU 11 of the service providing server 1 functions as a fund calculation unit 201 and a productization unit 202. A region of the storage unit 18 is provided with a rocket database 401 and a processing result database 402.

The fund calculation unit 201 includes a purchase/sale cost acquisition unit 301, a depreciation calculation unit 302, a rental fee acquisition unit 303, a management cost acquisition unit 304, and a profit/loss calculation unit 305.

In the fund calculation unit 201, for example, with respect to a combination of t reusable rockets RC (t is an integer equal to or greater than 1) arbitrarily selected from among a plurality of reusable rockets RC, the following operations are executed by the respective calculation units. In the present embodiment, for each of the arbitrarily selected t reusable rockets RC, parameters including the type, historical information including the number of elapsed years, and price are associated, stored and managed in the rocket database 401. Here, the combination of the t reusable rockets RC may include not only the reusable rockets RC currently owned by the rocket fund F, but also reusable rockets RC that may be purchased by the rocket fund F in the future.

The purchase/sale cost acquisition unit 301 calculates the purchase cost and the sale price (trade-in value) after a predetermined period for each of the t reusable rockets RC. For the reusable rockets RC currently owned by the rocket fund F, the actual amount paid at the time of purchase is acquired as the purchase cost. For the reusable rockets RC that may be purchased by the rocket fund F in the future, a predicted purchase cost is calculated based on the information obtained from the seller terminal 3, and is acquired as the purchase cost. The predicted purchase cost may be calculated at a location not particularly limited, and may be calculated by the purchase/sale cost acquisition unit 301 itself, a functional block (not illustrated) of the fund calculation unit 201, or another information processing apparatus. The specific investment amount by the investor I is determined based on the purchase cost of the t reusable rockets RC. The sale price (trade-in value) after the predetermined period is a predicted sale price calculated based on the above-described parameters and the purchase cost of the reusable rockets RC. The predicted sale price may calculated at a location not particularly limited, and may be calculated by the purchase/sale cost acquisition unit 301 itself, a functional block (not illustrated) of the fund calculation unit 201, or another information processing apparatus.

The depreciation calculation unit 302 calculates depreciation costs for each of the t reusable rockets RC, based on the purchase cost and other calculation results obtained by the purchase/sale cost acquisition unit 301. Specific examples of the depreciation cost calculation will be described later with reference to FIGS. 7 to 9.

In the present embodiment, the rental fee acquisition unit 303 acquires rental fees for each of the t reusable rockets RC, in cases where the service provider M, acting as the lessor having leased the t reusable rockets RC from the rocket fund F, leases the t reusable rockets RC to the renter R under a lease agreement. Since the rental fee is a variable factor, the rental fee acquisition unit 303 may acquire the rental fee, based on values derived from a predefined table or may acquire a value calculated using a predetermined algorithm. The rental fee may be calculated at a location not particularly limited, and may be calculated by the rental fee acquisition unit 303 itself, a functional block (not illustrated) of the fund calculation unit 201, or another information processing apparatus. Here, in a case where the renter R performs launching or maintenance and repair of the reusable rockets RC by oneself, the management cost on the service provider M side becomes unnecessary, and the rental fee may accordingly be set at a lower value.

The management cost acquisition unit 304 acquires the management cost required for the t reusable rockets RC during the period up to the time of sale after a predetermined period. Since the management cost includes launching costs for launching the t reusable rockets RC and repair and maintenance costs for maintaining and repairing the t reusable rockets RC, which are performed by the service provider M, a predicted amount is calculated based on the assumptions regarding the number of launches and the number of maintenance and repair operations, and is acquired as the management cost. The predicted amount may be calculated at a location not particularly limited, and may be calculated by the management cost acquisition unit 304 itself, a functional block (not illustrated) of the fund calculation unit 201, or another information processing apparatus. As described above, the launching, maintenance, or repair of the reusable rockets RC is not necessarily executed by the service provider M, and may be performed by another party, such as the renter R or the investor I. In such cases, since the management cost becomes lower, benefits may be granted to the party performing the tasks. For example, in a case where the renter R is the performing party, the rental fee may be set lower as described above. Additionally, in a case where the investor I is the performing party, benefits such as increased dividends (or reduced investment amount for the same dividend) may be provided.

The profit/loss calculation unit 305 calculates at least the profit/loss amount of the rocket fund F and the profit/loss amount of the investor I, based on the acquisition results obtained by the purchase/sale cost acquisition unit 301, the calculation results obtained by the depreciation calculation unit 302, the acquisition results obtained by the rental fee acquisition unit 303, and the acquisition results obtained by the management cost acquisition unit 304. If necessary, the profit/loss calculation unit 305 also calculates the profit/loss amounts of the service provider M and the renter R. Here, the profit/loss of the rocket fund F refers mainly to the total of rental income and sale price (trade-in value) for the reusable rockets RC, minus various costs including the depreciation cost and management cost associated with the reusable rockets RC. The profit/loss of the investor I refers to the dividend amount from the rocket fund F minus the depreciation cost of the reusable rockets RC that can be accounted for as an expense by the investor I. The profit/loss of the renter R includes, mainly, the difference between the cost required for self-purchase of the reusable rockets RC and the cost required for leasing, as well as the improvement in the corporate asset value resulting from switching from ownership to leasing.

A single calculation result for a given combination of the t reusable rockets RC is stored in the processing result database 402.

The productization unit 202 can set, as the product of the rocket fund F, a specific one of one or more calculation results stored in the processing result database 402, or can execute the following simulation to set the product of the rocket fund F, based on an optimal calculation result.

Here, although not illustrated, the content of the rocket fund F product is represented, for example, by investment conditions, cash flow, and profit/loss statements. The investment conditions include, for example, the investment amount by the investor I, the annual loss amounts within the predetermined period for the investor I, and the final profit/loss. The cash flow includes the investment amount for the rocket fund F, the rental fees (at least the second rental fee described above), the sale price, the purchase cost, and the management cost. The profit/loss statement includes the revenue including the rental fees (at least the second rental fee described above) and the sale price, the expenses including the management cost and depreciation cost, and the historical profit and cumulative profit calculated based on the revenue and the expenses.

The productization unit 202 repeatedly executes each processing of the purchase/sale cost acquisition unit 301, the depreciation calculation unit 302, the rental fee acquisition unit 303, the management cost acquisition unit 304, and the profit/loss calculation unit 305, while performing simulations by varying combinations of the purchase cost, sale price, depreciation cost, rental fee, management cost, profit/loss of the rocket fund F, and profit/loss of the investor I for each of the t reusable rockets RC (and, as necessary, also including parameters associated with each of the t reusable rockets RC and the profit/loss of the renter R). Based on the execution results of the processing, the productization unit 202 determines the content of the product of the rocket fund F such that the profit/loss amount of the rocket fund F matches the desired amount of the investor I. That is, the productization unit 202 executes simulations by repeatedly executing the calculations by the fund calculation unit 201, while varying combinations of the purchase cost, sale price, depreciation cost, rental fee, profit/loss of the rocket fund F, and profit/loss of the investor I for each of the t reusable rockets RC (and, as necessary, also including parameters associated with each of the t reusable rockets RC and the profit/loss of the renter R). The productization unit 202 sets, as the product of the rocket fund F, the optimal result among the many simulation results obtained by the fund calculation unit 201. In this manner, the content of the product of the rocket fund F becomes optimal for the service provider M and the investor I (and the renter R, if necessary).

The productization unit 202 can also execute simulations regarding combinations of the profit/loss of the rocket fund F and the profit/loss of the investor I, in a case where at least part of the t reusable rockets RC becomes unusable before the predetermined period elapses. The productization unit 202 can determine, as part of the content of the rocket fund F, countermeasures (actions or conditions), in a case where at least part of the t reusable rockets RC becomes unusable before the predetermined period elapses, based on the results of such simulations. The countermeasures mentioned here are not particularly limited. For example, it is possible to increase the dividends after the expiration of the predetermined period compared to normal, under the condition that the investor I is made aware of the risk that the rocket fund F may terminate if at least part of the t reusable rockets RC becomes unusable before the predetermined period elapses.

One example of the rocket fund F has been described above. The cases in which the information processing apparatus according to the embodiment of the present invention can be applied are not limited to the example illustrated in FIG. 5, and for example, the configuration illustrated in FIG. 6 may be adopted. FIG. 6 is a functional block diagram illustrating an example of a functional configuration of the service providing server illustrated in FIG. 3, which differs from that illustrated in FIG. 5. That is, in the example illustrated in FIG. 6, the service provider M is a single company serving as the operating entity.

As is readily apparent from comparing FIGS. 5 and 6, the functional configuration of the service providing server 1 remains similar regardless of the operating entity. In other words, there are two differences between the examples illustrated in FIGS. 5 and 6. The first difference is the source of the purchase cost of the t reusable rockets RC. In the former, the source of the purchase cost of the t reusable rockets RC is the investment amount from the investor I, whereas in the latter, the source is the amount independently prepared by the service provider M (as a single company). The second difference is that, in the latter, since there is no investor I, there are no dividends, and all revenue generated by the rocket fund F becomes revenue of the service provider M. Other than these two differences, both configurations are basically the same.

Here, the calculation method depreciation costs for the reusable rockets RC will be described with reference to FIGS. 7 to 9.

First, the depreciation cost for vehicles such as trucks is calculated based on the useful life stipulated by tax laws, that is, by subtracting the elapsed years from the statutory useful life prescribed for each vehicle, and applying a certain formula. However, since the useful life (depreciation period) of reusable rockets RC is not defined by tax law as of the filing date of the present application, and due to advances in technology making reuse feasible, it is reasonable to perform depreciation cost calculations in accordance with the actual conditions using a calculation method, based on the number of available uses of each component, as illustrated in FIG. 7. This method as illustrated in FIG. 7 is expected to be accepted or even required by tax authorities in the future. FIG. 7 illustrates a specific example of the depreciation costs of a reusable rocket calculated using a calculation method based on the number of available uses of each component.

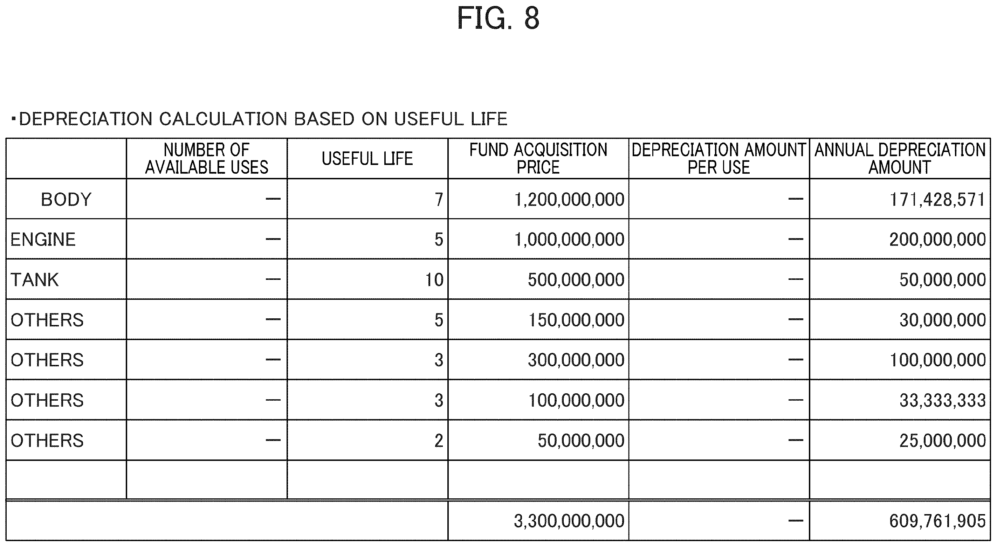

However, since some components may be usable for a plurality of years regardless of the number of uses, it is also necessary to calculate a depreciation cost for the reusable rocket RC, based on the useful life of each component, as tentatively determined (or, based on statutory values if defined), as illustrated in FIG. 8. FIG. 8 illustrates a specific example of the depreciation costs of a reusable rocket calculated using a calculation method, based on the useful life of each component.

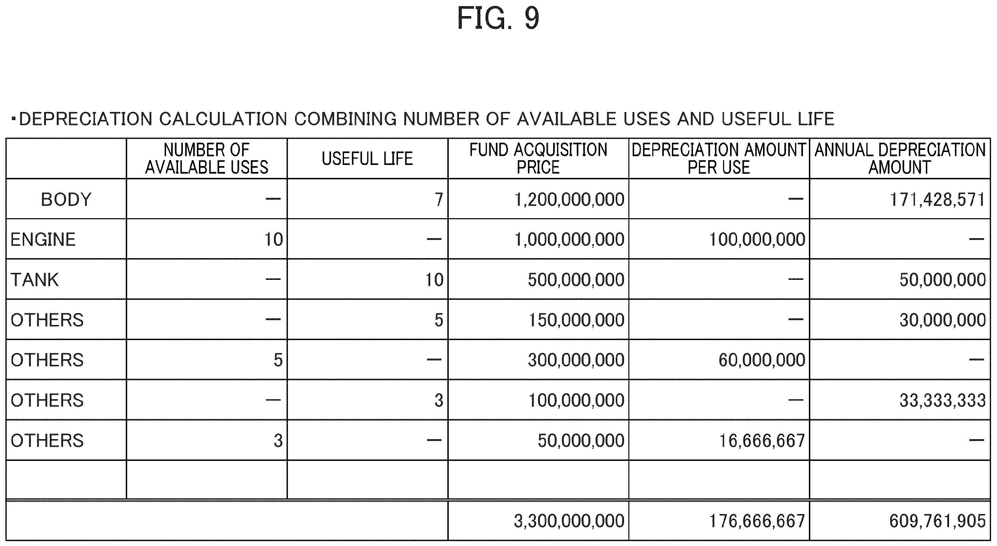

In summary, it is preferable to calculate depreciation cost for the reusable rockets RC using the calculation method illustrated in FIG. 9, which combines both the calculation method based on the number of available uses of each component illustrated in FIG. 7 and the calculation method based on the useful life of each component illustrated in FIG. 8, in order to reflect actual conditions. FIG. 9 illustrates a specific example of the depreciation cost of a reusable rocket calculated using a calculation method based on both the number of uses and the useful life of each component. In other words, the calculation method illustrated in FIG. 9 is a method in which the depreciation cost of a reusable rocket RC is calculated using a predetermined formula that includes at least parameters including the number of uses and the useful life for one or more components.

As described above, in the case of reusable rockets RC, depreciation cost calculations must be performed by combining the number of available uses and the useful life for each component. Moreover, considering various other variable factors, it is practically impossible to calculate the depreciation cost manually, and the use of simulations as in the present embodiment is essential. Here, other variable factors include the accurate prediction of usage periods and useful life, changes in useful life or usage period due to technological advancement, changes in useful life or usage period depending on combinations of individual components (such as compatibility or mutual interference), demand forecasts for the reusable rocket RC, revenue and usage frequency, and cost (in cases where calculation is performed per use, these parameters need to be taken into account). In addition, various other variable elements may exist, including those related to investors and rocket launching companies.

While the embodiment of the present invention has been described above, the present invention is not limited to the above-described embodiment, and modifications and improvements within the scope of achieving the object of the present invention are included in the present invention.

For example, in the above-described embodiment, the fund target is the reusable rocket RC; however, there is no particular limitation thereto. That is, any mobile body that can be reused repeatedly and requires repair and maintenance - thus requiring consideration of management costs including such repair and maintenance costs in fund calculations - can be adopted as a fund target.

Further, the conditions for calculating the rental fee by the rental fee acquisition unit 303 for the reusable rocket RC are not limited to a single condition. The rental fee acquisition unit 303 can perform calculations for the rental fee of the reusable rocket RC in accordance with each condition defined for the rental fee calculation. For example, the rental fee can be calculated based on the amount of consideration obtained when the renter R uses the reusable rocket RC to provide a predetermined service. As a result, the service provider M can not only lease the reusable rocket RC but can also provide (or broker) a specific service using the reusable rocket RC (e.g., cargo transportation) to the renter R.

In the above-described embodiment, the service provider M enters into a vehicle lease agreement and an asset management agreement with the rocket fund F, and leases the reusable rocket RC to the renter R. However, the embodiment is not limited to this configuration. The rocket fund F may directly lease the reusable rocket RC to the renter R.

The hardware configuration illustrated in FIG. 4 is merely an example for achieving the object of the present invention, and is not particularly limited.

The functional block diagrams illustrated in FIGS. 5 and 6 are merely examples, and are not particularly limited. That is, the information processing apparatus only needs to include functionality capable of executing the above-described series of processing as a whole, and the specific functional blocks used to implement such functionality are not limited to the examples illustrated in FIGS. 5 and 6.

Also, the physical locations of the functional blocks are not limited to the examples in FIGS. 5 and 6, and may be arbitrary. Each functional block may be configured solely by hardware, solely by software, or by a combination of hardware and software.

When the processing of each functional block is executed by software, the program constituting such software is installed in a computer from a network or a recording medium. The computer may be a computer embedded in dedicated hardware. Alternatively, the computer may be a general-purpose computer, such as a server, smartphone, or personal computer, capable of executing various functions by installing various programs.

The recording medium containing such a program may not only be a removable medium that is distributed separately from the main device to provide the program to users, but may also be a recording medium provided in a pre-installed state in the main device.

In summary, the information processing apparatus to which the present invention is applied only needs to include the following configuration, and may take various forms of embodiments. That is, the information processing apparatus (e.g., the service providing server 1 in FIG. 3) to which the present invention is applied is:
an information processing system configured to determine a fund product (e.g., the rocket fund F in FIG. 2) that generates profit, based on a rental fee obtained when t mobile bodies (t is an integer equal to or greater than 1) (e.g., reusable rockets RC in FIG. 2), which are purchased through investment by an investor (e.g., the investor I in FIG. 2), are leased to a renter (e.g., the renter R in FIG. 2), and a sale price obtained when the t mobile bodies are sold after a predetermined period, the information processing system including:
a purchase/sale cost acquisition unit (e.g., the purchase/sale cost acquisition unit 301 in FIG. 5) configured to acquire a purchase cost of the t mobile bodies and a sale price of the t mobile bodies after the predetermined period;
a rental fee acquisition unit (e.g., the rental fee acquisition unit 303 in FIG. 5) configured to acquire a rental fee in a case where each of the t mobile bodies is leased to the renter;
a depreciation calculation unit (e.g., the depreciation calculation unit 302 in FIG. 5) configured to calculate a depreciation cost for each of the t mobile bodies;
a management cost acquisition unit (e.g., the management cost acquisition unit 304 in FIG. 5) configured to acquire a management cost including repair and maintenance costs associated with repair and maintenance of each of the t mobile bodies during the predetermined period;
a profit/loss calculation unit (e.g., the profit/loss calculation unit 305 in FIG. 5) configured to calculate a profit/loss amount of the fund and a profit/loss amount of the investor, based on the rental fee, the purchase cost, the sale price, the depreciation cost, and the management cost; and a productization unit (e.g., the productization unit 202 in FIG. 5) configured to set the fund product, based on the rental fee, the purchase cost, the sale price, the management cost, the profit/loss of the fund, and the profit/loss of the investor.

This makes it possible to provide investors with a fund product in which the investment target has excellent investment yields, supply-demand balance, and trading market stability, and is capable of achieving profits and losses desired by the investors.

The content of the fund product may be represented by investment conditions, cash flow, and a profit/loss statement.

The investment conditions may include the investment amount by the investor, the annual loss amount for the investor during the predetermined period, and the final profit/loss.

The cash flow may include the investment amount of the fund, the rental fee, the sale price, the purchase cost, and the management cost.

The profit/loss statement may include revenue including the rental fee and the sale price, expenses including the depreciation cost and the management cost, and a historical profit and a cumulative profit calculated based on such revenue and expenses.

The productization unit may execute simulations, in which combinations of the purchase cost, the sale price, the depreciation cost, the rental fee, the management cost, the profit/loss of the fund, and the profit/loss of the investor are varied for each of the t mobile bodies,
while repeatedly executing each processing of the purchase/sale cost acquisition unit, the depreciation calculation unit, the rental fee acquisition unit, the management cost acquisition unit, and the profit/loss calculation unit, and
the content of the fund product may be determined such that the profit/loss amount of the fund becomes the desired amount of the investor.

The productization unit may execute simulations regarding combinations of the profit/loss of the fund and the profit/loss of the investor in cases where at least part of the t mobile bodies becomes unusable before the predetermined period elapses.

The mobile body may be a reusable rocket (e.g., the reusable rocket RC illustrated in FIGS. 1 and 2).

The depreciation calculation unit may calculate the depreciation cost for each of the t mobile bodies using a predetermined calculation formula that includes, at least, parameters including the number of uses and the useful life of one or more components (e.g., as calculated in FIG. 9).

Note that, in this specification, the term "steps" describing the program recorded on a recording medium includes not only processing executed chronologically in accordance with the described order, but also processing executed in parallel or separately, and not necessarily in chronological order.

Further, in this specification, the term "system" refers to an overall apparatus composed of a plurality of devices, units, or the like.

### EXPLANATION OF REFERENCE NUMERALS

1: service providing server
2, 2-1 to 2-n: investor terminal
3, 3-1 to 3-m: seller terminal
4, 4-1 to 4-p: renter terminal
11: CPU (central processing unit)
12: ROM (read only memory)
13: RAM (random access memory)
14: bus
15: input/output interface
16: output unit
17: input unit
18: storage unit
19: communication unit
20: drive
30: removable medium
201: fund calculation unit
202: productization unit
301: purchase/sale cost acquisition unit
302: depreciation calculation unit
303: rental fee acquisition unit
304: management cost acquisition unit
305: profit/loss calculation unit
401: rocket database
402: processing result database
M: service provider
I, I-1 to I-n: investor
S, S-1 to S-m: seller
R, R-1 to R-p: renter
RC, RC-1 to RC-m, RC-p: reusable rocket
N: network

## Claims

1. An information processing system configured to determine a fund product that generates profit, based on a rental fee obtained when t mobile bodies (t is an integer equal to or greater than 1), which are purchased through investment by an investor, are leased to a renter, and a sale price obtained when the t mobile bodies are sold after a predetermined period, the information processing system comprising:
a purchase/sale cost acquisition unit configured to acquire a purchase cost of the t mobile bodies and a sale price of the t mobile bodies after the predetermined period;
a rental fee acquisition unit configured to acquire a rental fee in a case where each of the t mobile bodies is leased to the renter;
a depreciation calculation unit configured to calculate a depreciation cost for each of the t mobile bodies;
a management cost acquisition unit configured to acquire a management cost including repair and maintenance costs associated with repair and maintenance of each of the t mobile bodies during the predetermined period;
a profit/loss calculation unit configured to calculate a profit/loss amount of the fund and a profit/loss amount of the investor, based on the rental fee, the purchase cost, the sale price, the depreciation cost, and the management cost; and
a productization unit configured to set the fund product, based on the rental fee, the purchase cost, the sale price, the management cost, the profit/loss of the fund, and the profit/loss of the investor.

2. The information processing system according to claim 1,
wherein content of the fund product is represented by investment conditions, a cash flow, and a profit/loss statement.

3. The information processing system according to claim 2,
wherein the investment conditions include an investment amount by the investor, an annual loss amount of the investor during the predetermined period, and a final profit/loss.

4. The information processing system according to claim 2,
wherein the cash flow includes an investment amount of the fund, the rental fee, the sale price, the purchase cost, and the management cost.

5. The information processing system according to claim 2,
wherein the profit/loss statement includes revenue including the rental fee and the sale price, expenses including the depreciation cost and the management cost, and a historical profit and a cumulative profit calculated based on the revenue and the expenses.

6. The information processing system according to claim 1,
wherein the productization unit executes a simulation in which
a combination of the purchase cost, the sale price, the depreciation cost, the rental fee, the management cost, the profit/loss of the fund, and the profit/loss of the investor for each of the t mobile bodies is varied,
processing in the purchase/sale cost acquisition unit, the depreciation calculation unit, the rental fee acquisition unit, the management cost acquisition unit, and the profit/loss calculation unit is repeatedly executed, and
content of the fund product is determined such that the profit/loss amount of the fund becomes a desired amount of the investor.

7. The information processing system according to claim 6,
wherein the productization unit executes a simulation regarding a combination of the profit/loss of the fund and the profit/loss of the investor in a case where at least part of the t mobile bodies becomes unusable before the predetermined period elapses.

8. The information processing system according to claim 1,
wherein the mobile bodies are reusable rockets.

9. The information processing system according to claim 1,
wherein the depreciation calculation unit calculates the depreciation cost using a predetermined formula that includes, at least, parameters including the number of uses and a useful life for one or more components of each of the t mobile bodies.

10. An information processing method executed by an information processing system configured to determine a fund product that generates profit, based on a rental fee obtained when t mobile bodies (t is an integer equal to or greater than 1), which are purchased through investment by an investor, are leased to a renter, and a sale price obtained when the t mobile bodies are sold after a predetermined period, the information processing method comprising:
a purchase/sale cost acquisition step of acquiring a purchase cost of the t mobile bodies and a sale price of the t mobile bodies after the predetermined period;
a rental fee acquisition step of acquiring a rental fee in a case where each of the t mobile bodies is leased to the renter;
a depreciation calculation step of calculating a depreciation cost for each of the t mobile bodies;
a management cost acquisition step of acquiring a management cost including repair and maintenance costs associated with repair and maintenance of each of the t mobile bodies during the predetermined period;
a profit/loss calculation step of calculating a profit/loss amount of the fund and a profit/loss amount of the investor, based on the rental fee, the purchase cost, the sale price, the depreciation cost, and the management cost; and
a productization step of setting the fund product, based on the rental fee, the purchase cost, the sale price, the management cost, the profit/loss of the fund, and the profit/loss of the investor.

11. A program for causing a computer, which determines a fund product that generates profit, based on a rental fee obtained when t mobile bodies (t is an integer equal to or greater than 1), which are purchased through investment by an investor, are leased to a renter, and a sale price obtained when the t mobile bodies are sold after a predetermined period, to execute control processing comprising:
a purchase/sale cost acquisition step of acquiring a purchase cost of the t mobile bodies and a sale price of the t mobile bodies after the predetermined period;
a rental fee acquisition step of acquiring a rental fee when each of the t mobile bodies is leased to the renter;
a depreciation calculation step of calculating a depreciation cost for each of the t mobile bodies;
a management cost acquisition step of acquiring a management cost including repair and maintenance costs associated with repair and maintenance of each of the t mobile bodies during the predetermined period;
a profit/loss calculation step of calculating a profit/loss amount of the fund and a profit/loss amount of the investor, based on the rental fee, the purchase cost, the sale price, the depreciation cost, and the management cost; and
a productization step of setting the fund product, based on the rental fee, the purchase cost, the sale price, the management cost, the profit/loss of the fund, and the profit/loss of the investor.
